# EUROPEAN PATENT SPECIFICATION

(11) **EP 1 459 620 B1**
(45) Date of publication and mention of the grant of the patent: **26.07.2006**
(21) Application number: 04075781.7
(22) Date of filing: 11.03.2004
(51) Int. Cl.: A01G 9/10

(54) **Improved plant tray**
Verbesserte Pflanzenpalette
Plateau pour plantes amélioré

(30) Priority: 12.03.2003 NL 1022898
(43) Date of publication of application: 22.09.2004
(73) Proprietor: BATO TRADING BV, 4762 AH Zevenbergen (NL)
(72) Inventor: Spierings, Geertrudus Johannes Martinus, 5672 JD Eindhoven (NL)
(74) Representative: Eveleens Maarse, Pieter

(56) References cited:
- DE-U- 9 101 621
- FR-A- 2 839 852
- NL-C- 1 003 828
- NL-C- 1 012 417
- NL-C- 1 018 273
- US-A- 2 799 972
- US-A- 3 949 523

## Description

The present invention relates to a plant tray according to claim 1.

A plant tray according to the preamble of claim 1 is known from DE-U-9101621. This plant tray is used for cultivating ornamental plants. When the plants have been grown sufficiently, three of those plants will be transplanted into one larger container with a round or oval form. The cavities of the tray have such a form that three of them together correspond to the form of a larger container. The purpose is to fit the clods of three grown plants together in the larger container without the need to add garden soil.

Some plants are direction-sensitive. This means that they have a preferred direction for producing flowers and fruits in the direction in which for instance they have received light during growing, or the direction or side of the plant where flower and/or fruit formation will take place. This is found to be the case for instance with strawberries. A specific problem here is that this preferred direction is difficult to see on the plants at the moment they are transplanted from the growing container, such as a tray, to a subsequent container or to open ground.

The object of the present invention is therefore to provide means with which it is possible to see, from the combination of plant and plug, in which direction the plant has grown in the tray.

This object is achieved with a plant tray according to claim 1.

Using the marking caused by these flat sides it is possible to ascertain in which direction the plants stood in the tray, and thus from which side the plants have received light or on which sides flower or fruit formation will take place. It is hereby possible to place the plants into a subsequent container or in the open ground such that they are placed with their preferred direction in the direction where flower and/or fruit formation will take place. The yield of flowers and/or fruit can hereby be increased.

Effective use is made of the surface area available in the tray when the flat side connects at both edges to a flat short side, and both short sides transpose into the same curved side.

According to a preferred embodiment, the cavities are arranged in the tray with their flat side in the same direction. Taking cuttings can hereby take place efficiently because the cuttings must each be taken in the same direction, while the surface area available in the tray is still used effectively.

Another preferred embodiment provides the measure that the cavities are ordered in parallel rows and that the cavities of two parallel rows are arranged with their flat sides toward each other. The use of the available space is herein more effective, while the cuttings need only be placed in two opposing directions. In this form growth of the cutting takes place toward the outside of the tray. The removal of runners can hereby take place in automated manner.

In order to prevent liquid and nutrients present in the liquid coming to lie in the bottom of the cavity and there disappearing via the drainage opening, a substantially horizontally extending step is preferably arranged in each of the cavities. This slows down run-off of water. The liquid including nutrients thus remains for longer on the upper side of the cup where drying-out first occurs. According to another preferred embodiment, the step is provided with a standing edge. The effect of retaining water and the nutrients therein is hereby enhanced.

The invention also relates to an assembly of a plant tray and direction-sensitive plants according to claim 10, as well as a method for cultivating direction-sensitive plants according to claim 12.

The advantages stated above are achieved with this assembly and method.
- placing a cutting of a direction-sensitive plant with the stem, with which the cutting was connected to the parent plant, in a defined direction in a cavity provided with a marking in a container;
- growing the cutting;
- removing the plug from the cavity; and
- subsequently placing in a defined direction the plug with the impression of the marking.

The advantages stated in the preamble are achieved with this method.

Other attractive preferred embodiments are stated in the remaining sub-claims.

The present invention will be elucidated hereinbelow with reference to the annexed figures, in which:
Figure 1 shows a schematic perspective of a tray according to the present invention provided with ten cavities;
Figure 2 is a view corresponding with figure 1 of the underside of the tray shown in figure 1;
Figure 3 shows a perspective detail view according to arrow III in figure 1;

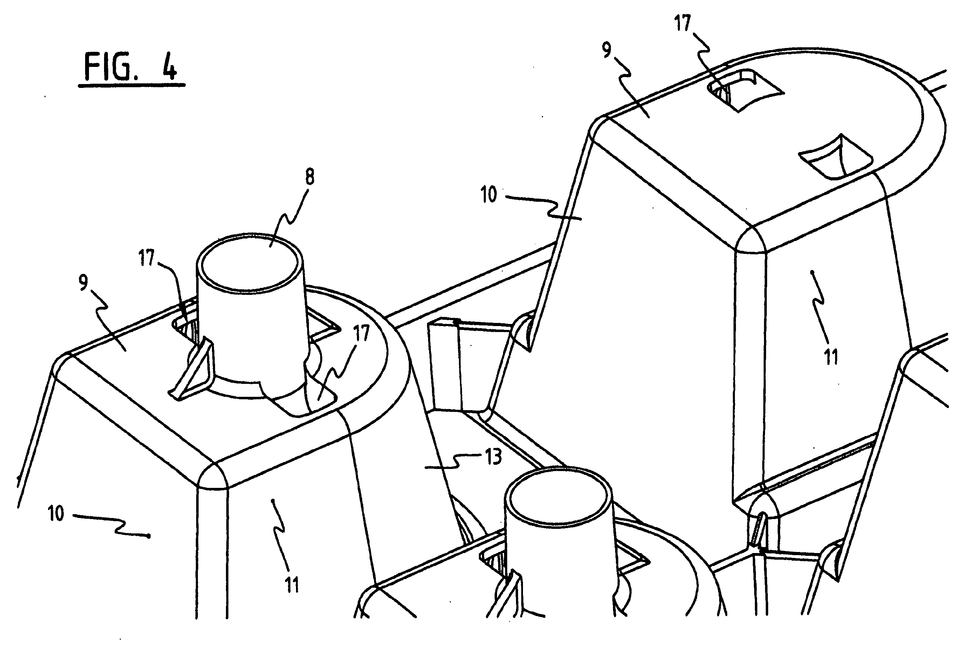

Figure 4 shows a perspective view according to arrow IV in figure 2; and
Figure 5 is a top view of a variant of the tray according to the present invention.

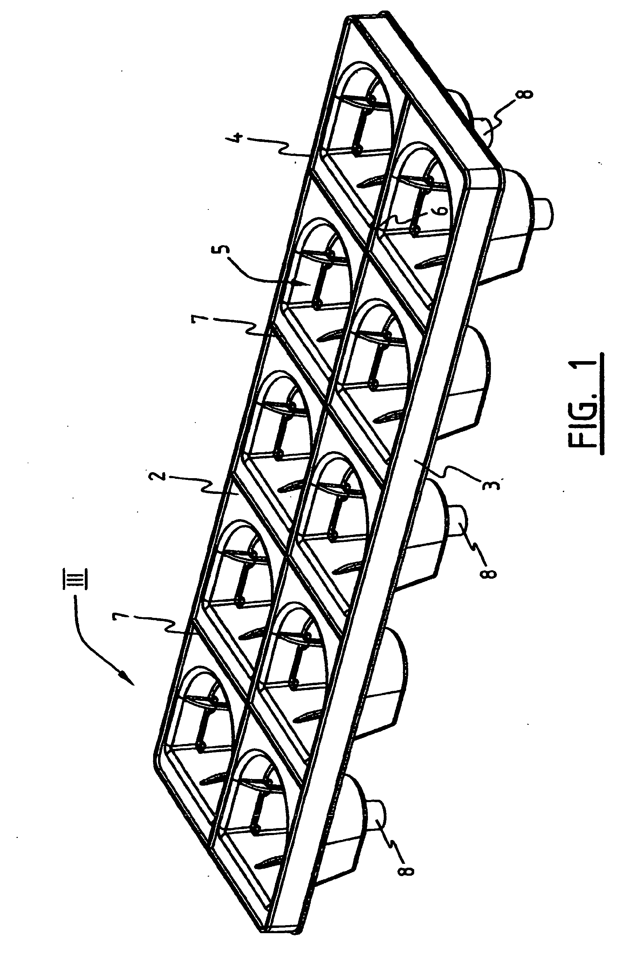

The tray shown in figure 1 and designated as a whole with 1 is formed by a flat plate 2 which is strengthened at its edges with a downward extending skirt 3. Skirt 3 can also extend slightly above the actual plant so that an edge 4 is for instance created for retaining water. Ten cavities 5 are arranged in plate 2. The cavities are mutually separated by a number of ridges 6 respectively 7. A part of flat plate 2 is thus allocated to each cavity 6, which part is separated from the other parts of the flat plate by ridges 6, 7 and bounded on its outer edge by skirt 3 and standing edge 4.

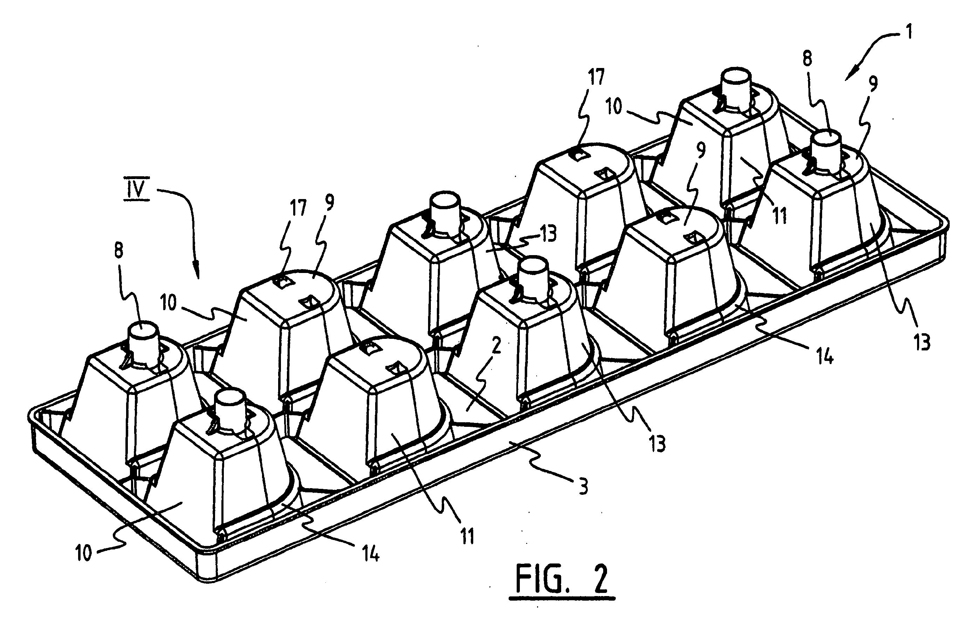

As shown clearly in figure 2, cavities 6 each have the form on one side of a truncated pyramid and on the other half take the form of a truncated cone.

The part with the form of a truncated pyramid has a substantially straight surface which forms a good marking. It hereby becomes possible to place plant plugs cultivated in the cavities into a subsequent culture medium in a defined direction.

It will be apparent that, instead of the combination of one half of a truncated cone and one half of a truncated pyramid, it is possible to apply other shapes such as spatial forms with a horizontal section of an irregular polygon. It is for instance also possible to apply the form of an irregular polygon and to provide one of the surfaces of the polygon with a marking, such as a concave or convex surface.

The tray must be supported at some distance from the concrete ground, which is formed in many cases by a concrete floor or by a concrete table. A number of the cavities is therefore provided with legs extending from the underside of the cavities. It is pointed out here that it is known from the prior art to apply legs extending downward from the flat plate. With a view to saving material, it is of course more attractive to make use of legs extending from the underside of the cavities.

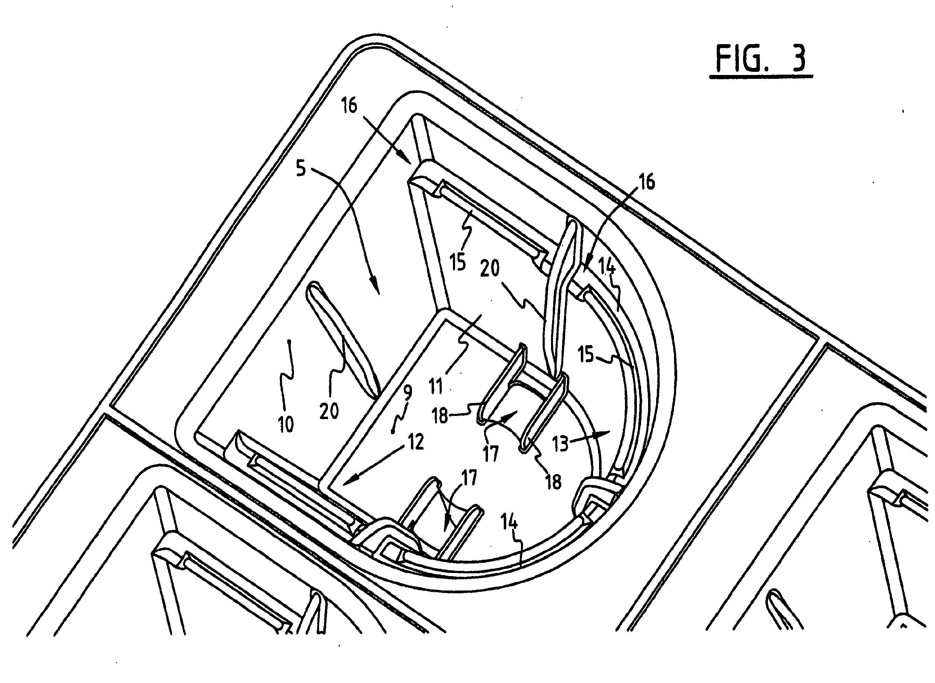

The form of the cavities will now be further elucidated with reference to figure 3.

Figure 3 shows a cavity 5 which is placed at a corner and which is bounded on its underside by a bottom 9 which is bounded on one side by a flat wall 10 which serves as marking, is bounded on two short sides by two side surfaces 11, 12 and bounded on its remaining side by a semicircular curved surface 13. Both flat walls 11, 12 connect onto semicircular surface 13.

Surface 13 forms the external delimitation of a truncated cone, while surfaces 10, 11 and 12 form the external delimitation of a truncated pyramid.

A step 14 is herein arranged in the two flat walls 11, 12 and in semicircular surface 13. Step 14 serves as reservoir for the purpose of retaining water with nutrients in the upper part of the plug which is easily reached by the roots of the plant.

In order to further enhance this retaining effect, the steps are provided with standing edges 15.

Passages 16 are arranged in these steps to drain excess water. Arranged in cavity bottom 9 are openings 17 which likewise serve to drain excess water. These openings are bounded by a standing edge 18, this standing edge 18 serving to prevent not only water but also culture material such as soil passing through openings 17. Vertically extending ribs 20 are further arranged on the inside of the cavity.

For strengthening purposes a number of strengthening ribs 21 is also arranged on the underside of flat plate 2, which serve to strengthen the above described structure.

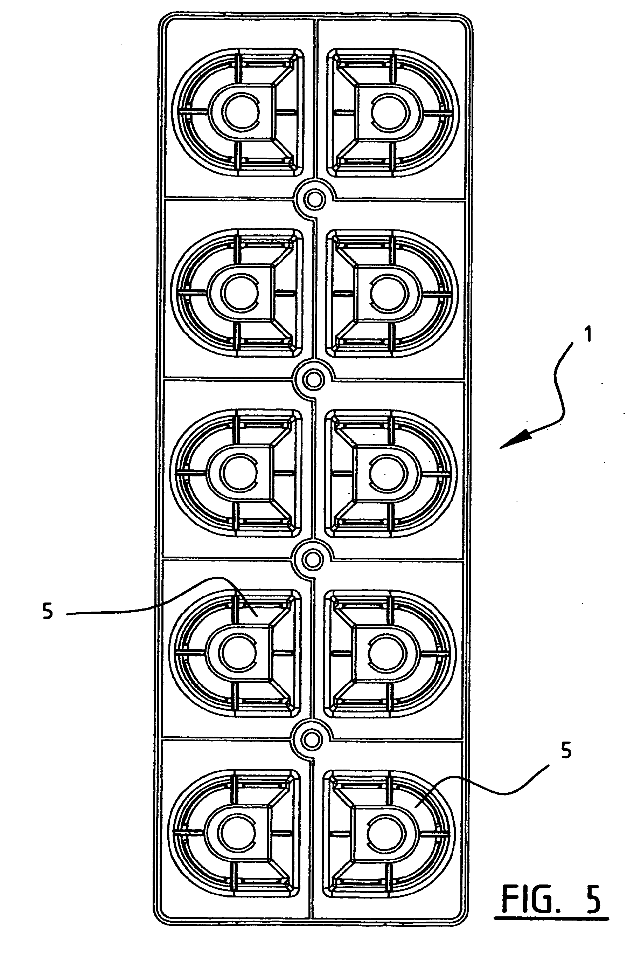

Figure 5 shows a top view of a tray, wherein the flat sides of the cavities are arranged in pairs toward each other. Optimum use is hereby made of the space available on the tray.

It will be apparent that diverse modifications can be made to the embodiment described here without departing from the scope of the invention.

## Claims

1. Plant tray (1) comprising a substantially flat plate (2) with recesses which are arranged therein and which enclose cavities (5) for the purpose of cultivating plants in the cavities, said cavities being provided with a flat side (10) and a curved side (13), **characterized in that** the cavities have an axis of symmetry cutting said flat and curved sides (10, 13) midway.

2. Plant tray (1) as claimed in claim 1, **characterized in that** the flat side (10) connects at both edges to a flat short side (11, 12), and that both short sides change into the same curved side (13).

3. Plant tray (1) as claimed in claim 2, **characterized in that** the cavities (5) are arranged with their flat side (10) in the same direction in the tray (1).

4. Plant tray (1) as claimed in claim 2, **characterized in that** the cavities (5) are arranged in rows and that the cavities (5) of two rows are arranged with their flat sides (10) toward each other.

5. Plant tray (1) as claimed in any of the foregoing claims, **characterized in that** a substantially horizontally extending step (14) is arranged in the cavities.

6. Plant tray (1) as claimed in claim 5, **characterized in that** the step is provided with a standing edge (15).

7. Plant tray (1) as claimed in claim 6, **characterized in that** the standing edge (15) is provided with interruptions (16).

8. Plant tray as (1) claimed in any of the foregoing claims, **characterized in that** the cavities (5) are provided in their bottom surface (9) with an opening (17).

9. Plant tray (1) as claimed in any of the foregoing claims, **characterized in that** the tray (1) is provided with legs (8) which each extend downward from the bottom surface (9) of the cavities (5).

10. Assembly of a plant tray (1) and direction-sensitive plants, such as strawberry plants, wherein the plant tray (1) comprises a substantially flat plate (2) with recesses which are arranged therein and which enclose cavities (5) for cultivating the plants, wherein each cavity (5) is provided with a marking which leaves an impression to the clod of the plant.

11. Assembly according to claim 11, wherein each cavity (5) is provided with a flat side (10) and a curved side (13) and an axis of symmetry cutting said flat and curved sides (10, 13) midway.

12. Method for cultivating direction-sensitive plants, comprising the following steps of:
- placing a cutting of a direction-sensitive plant with the stem, with which the cutting was connected to the parent plant, in a defined direction in a cavity (5) provided with a marking in a tray (1);
- growing the cutting;
- removing the plant from the cavity (5), and
- subsequently placing the plant in a larger container in a defined direction using the impression of the marking on its clod.

13. Method as claimed in claim 12, **characterized in that** the plant is placed in a cavity (5) provided with a flat side (10) and a curved side (13) and an axis of symmetry cutting said flat and curved sides (10, 13) midway.

14. Method as claimed in claim 13, **characterized in that** the plant is formed by a strawberry plant.

## Patentansprüche

1. Pflanzenpalette (1), welche eine im Wesentlichen fläche Platte (2) mit Ausnehmungen umfasst, welche darin angeordnet sind, und welche Hohlräume (5) zum Zweck des Anbaus von Pflanzen in den Hohlräumen einschließen, wobei die Hohlräume mit einer flachen Seite (10) und einer gekrümmten Seite (13) versehen sind, **dadurch gekennzeichnet, dass** die Hohlräume eine Symmetrieachse aufweisen, welche die flachen und gekrümmten Seiten (10, 13) in der Mitte schneiden.

2. Pflanzenpalette (1) wie in Anspruch 1 beansprucht, **dadurch gekennzeichnet, dass** die flache Seite (10) an beiden Kanten mit einer flachen kurzen Seite (11, 12) verbunden ist, und dass beide kurze Seiten in die gleiche gekrümmte Seite (13) wechseln.

3. Pflanzenpalette (1) wie in Anspruch 2 beansprucht, **dadurch gekennzeichnet, dass** die Hohlräume (5) mit ihrer flachen Seite (10) in der gleichen Richtung (1) wie die Palette (1) angeordnet sind.

4. Pflanzenpalette (1) wie in Anspruch 2 beansprucht, **dadurch gekennzeichnet, dass** die Hohlräume (5) in Reihen angeordnet sind, und dass die Hohlräume (5) von zwei Reihen mit ihren flachen Seiten (10) in Richtung zueinander angeordnet sind.

5. Pflanzenpalette (1) wie in irgendeinem der vorhergehenden Ansprüche beansprucht, **dadurch gekennzeichnet, dass** eine sich im Wesentlichen horizontal erstreckende Stufe (14) in den Hohlräumen angeordnet ist.

6. Pflanzenpalette (1) wie in Anspruch 5 beansprucht, **dadurch gekennzeichnet, dass** die Stufe mit einer aufrechten Kante (15) versehen ist.

7. Pflanzenpalette (1) wie in Anspruch 6 beansprucht, **dadurch gekennzeichnet, dass** die aufrechte Kante (15) mit Unterbrechungen (16) versehen ist.

8. Pflanzenpalette (1) wie in irgendeinem der vorhergehenden Ansprüche beansprucht, **dadurch gekennzeichnet, dass** die Hohlräume (5) in ihrer unteren Oberfläche (9) mit einer Öffnung (17) versehen sind.

9. Pflanzenpalette (1) wie in irgendeinem der vorhergehenden Ansprüche beansprucht, **dadurch gekennzeichnet, dass** die Palette (1) mit Beinen (8) versehen ist, welche sich jeweils nach unten von der unteren Oberfläche (9) der Hohlräume (5) erstrecken.

10. Anordnung einer Pflanzenpalette (1) und richtungsempfindlichen Pflanzen, wie beispielsweise Erdbeerpflanzen, wobei die Pflanzenpalette (1) eine im Wesentlichen flache Platte (2) mit Ausnehmungen umfasst, welche darin angeordnet sind, und welche Hohlräume (5) zum Anbauen der Pflanzen einschließen, wobei jeder Hohlraum (5) mit einer Markierung versehen ist, welche einen Abdruck auf dem Erdklumpen der Pflanze hinterläßt.

11. Anordnung gemäß Anspruch 11, wobei jeder Hohlraum (5) mit einer flachen Seite (10) und einer gekrümmten Seite (13) und einer Symmetrieachse versehen ist, welche die flachen und gekrümmten Seiten (10, 13) in der Mitte schneidet.

12. Verfahren zum Anbauen richtungsempfindlicher Pflanzen, welches die folgenden Schritte umfasst:
- Anordnen eines Stecklings einer richtungsempfindlichen Pflanze mit dem Stamm, mit welchem der Steckling mit der Mutterpflanze verbunden war, in einer definierten Richtung in einem Hohlraum (5), welcher mit einer Markierung in einer Palette (1) versehen ist;
- Wachsen lassen des Stecklings;
- Entfemen der Pflanze von dem Hohlraum (5), und
- anschließendes Anordnen der Pflanze in einem größeren Behälter in einer definierten Richtung unter Verwendung des Abdrucks der Markierung auf ihrem Erdklumpen.

13. Verfahren wie in Anspruch 12 beansprucht, **dadurch gekennzeichnet, dass** die Pflanze in einem Hohlraum (5) angeordnet wird, welcher mit einer flachen Seite (10) und einer gekrümmten Seite (13) und einer Symmetrieachse versehen ist, welche die flachen und gekrümmten Seiten (10, 13) in der Mitte schneidet.

14. Verfahren wie in Anspruch 13 beansprucht, **dadurch gekennzeichnet, dass** die Pflanze durch eine Erdbeerpflanze gebildet wird.

## Revendications

1. Porte-plants (1) comprenant une plaque sensiblement plate (2) avec des renfoncements qui sont agencés dedans et qui enferment des cavités (5) afin de cultiver des plants dans les cavités, lesdites cavités étant pourvues d'un côté plat (10) et d'un côté incurvé (13), **caractérisé en ce que** les cavités présentent un axe de symétrie coupant lesdits côtés plat et incurvé (10, 13) à mi-chemin.

2. Porte-plants (1) selon la revendication 1, **caractérisé en ce que** le côté plat (10) se raccorde au niveau des deux bords à un côté court plat (11, 12), et **en ce que** les deux côtés courts se changent en le même côté incurvé (13).

3. Porte-plants (1) selon la revendication 2, **caractérisé en ce que** les cavités (5) sont agencées avec leur côté plat (10) dans la même direction dans le porte-plants (1).

4. Porte-plants (1) selon la revendication 2, **caractérisé en ce que** les cavités (5) sont agencés en lignes et **en ce que** les cavités (5) de deux lignes sont agencées avec leurs côtés plats (10) les uns vers les autres.

5. Porte-plants (1) selon l'une quelconque des revendications précédentes, **caractérisé en ce qu'**un échelon s'étendant sensiblement horizontalement (14) est agencé dans les cavités.

6. Porte-plants (1) selon la revendication 5, **caractérisé en ce que** l'échelon est pourvu d'un bord dressé (15).

7. Porte-plants (1) selon la revendication 6, **caractérisé en ce que** le bord dressé (15) est pourvu d'interruptions (16).

8. Porte-plants (1) selon l'une quelconque des revendications précédentes, **caractérisé en ce que** les cavités (5) sont pourvues dans leur surface inférieure (9) d'une ouverture (17).

9. Porte-plants (1) selon l'une quelconque des revendications précédentes, **caractérisé en ce que** le porte-plants (1) est pourvu de pieds (8) chacun s'étendant vers le bas depuis la surface inférieure (9) des cavités (5).

10. Assemblage d'un porte-plants (1) et de plants sensibles à une direction, tels que des plants de fraisiers, dans lequel le porte-plants (1) comprend une plaque sensiblement plate (2) avec des renfoncements qui sont agencés dedans et qui enferment des cavités (5) pour cultiver des plants, dans lequel chaque cavité (5) est pourvue d'un marquage qui laisse une impression sur la motte du plant.

11. Assemblage selon la revendication 11, dans lequel chaque cavité (5) est pourvue d'un côté plat (10) et d'un côté incurvé (13) et d'un axe de symétrie coupant lesdits côtés plat et incurvé (10, 13) à mi-chemin.

12. Procédé de culture de plants sensibles à une direction, comprenant les étapes consistant à :
- placer une bouture d'un plant sensible à une direction avec la tige, avec laquelle la bouture est raccordée au plant mère, dans une direction définie dans une cavité (5) pourvue d'un marquage dans un porte-plants (1) ;
- faire pousser la bouture ;
- retirer le plant de la cavité (5), et
- placer ensuite le plant dans un conteneur plus grand dans une direction définie à l'aide de l'impression du marquage sur sa motte.

13. Procédé selon la revendication 12, **caractérisé en ce que** le plant est placé dans une cavité (5) pourvue d'un côté plat (10) et d'un côté incurvé (13) et d'un axe de symétrie coupant lesdits côtés plat et incurvé (10, 13) à mi-chemin.

14. Procédé selon la revendication 13, **caractérisé en ce que** le plant est formé par un plant de fraisier.
